# EUROPÄISCHE PATENTSCHRIFT

(11) **EP 0 345 217 B1**
(45) Veröffentlichungstag und Bekanntmachung des Hinweises auf die Patenterteilung: **19.01.1994**
(21) Anmeldenummer: 89810361.9
(22) Anmeldetag: 18.05.1989
(51) Int. Cl.: A63C 5/00

(54) **Sportgerät**
Sporting apparatus
Appareil de sport

(30) Priorität: 01.06.1988 DE 3818569
(43) Veröffentlichungstag der Anmeldung: 06.12.1989
(73) Patentinhaber: Salomon S.A., 74370 Pringy (FR)
(72) Erfinder: Landolt, Hanspeter, CH-8833 Samstagern (CH); Stanek, Vladimir, Dipl.Ing., CH-8810 Horgen (CH); Stettler, Johann Rudolf, CH-8472 Ober-Ohringen (CH)
(74) Vertreter: Altenburg, Udo, Dipl.-Phys.

(56) Entgegenhaltungen:
- EP-A- 0 153 456
- WO-A-88/01190
- FR-A- 2 409 776
- US-A- 3 977 688
- US-A- 4 002 315

## Beschreibung

Die vorliegende Erfindung bezieht sich auf ein Sportgerät mit mindestens einem Gleitkörper und Aufbau. Das Sportgerät kann zum Beispiel als Ski, als Skibob, als unter der Bezeichnung "Snowboard" bekanntes Schneebrett oder als Wasserski etc. ausgebildet sein. Unter dem Aufbau soll im Sinne der Erfindung entweder die Bindung bzw. die Bindungen, welche zum Beispiel an Skis, Wasserskis, Snowboards etc. angebracht wird, oder die am Vorder- und am Hinterski eines Skibobs vorgesehenen Baueinheiten verstanden werden.

Bei allen diesen Sportgeräten bildet die Befestigung des Aufbaus am Gleitkörper grössere oder kleinere Probleme. In den meisten Fällen werden die Bindungen an den Gleitkörpern, z.B. an den Skibrettern, am Snowboard etc., mittels Schrauben starr befestigt. Diese Art der Befestigung bringt jedoch grosse Nachteile mit sich. Die sehr starke Beanspruchung der Gleitkörper im Gebrauch führt zur allmählichen Lockerung der Schrauben und zur Loslösung der Bindungen. Noch stärker werden Skibobs und Snowboards beansprucht, wobei insbesondere die letzteren durch vorzeitiges Ausreissen der Befestigungsschrauben, welche die Bindungen festhalten sollten, schnell beschädigt werden, obwohl die Gleitkörper sonst noch voll einsatzfähig wären.

Zur Vermeidung der erwähnten Nachteile wurde bereits vorgeschlagen, in die Gleitkörper Einsätze aus Metall, Hartholz oder dgl. einzubauen, in welchen dann die Befestigungsschrauben Aufnahme finden. Auch diese Lösung konnte nicht befriedigen. Einerseits bildet die Verwendung von derartigen Einlagen im Gleitkörper eine nicht unwesentliche Erschwerung und Verteuerung der Herstellung und andererseits bildet eine solche Metalleinlage einen unerwünschten Fremdkörper, welcher den Gebrauch des Sportgerätes nachteilig beeinflusst. Im Gebrauch führen nämlich selbst eine im Rahmen des Normalen liegende Beanspruchungen zu einer momentanen, elastischen Verformung des Gleitkörpers und zwar im Sinne einer Krümmung desselben, welche in Folge der Flexibilität des Gleitkörpers an sich unschädlich ist. An den Stellen, wo die Einsätze eingebracht sind, wird die Flexibilität jedoch aufgehoben oder zumindest stark verringert, so dass der Gleitkörper an den betreffenden Stellen bei extremen Beanspruchungen oft reisst oder bricht bzw. ein abweichendes Elastizitätsverhalten zeigt.

Weitere Vorschläge zur Behebung der durch eine Verschraubung der Bindungen gegebenen Nachteile beinhalten die Befestigung der Bindung oder von Bindungsteilen durch Ankleben, Verschweissen oder Eingiessen derselben, so dass eine unlösbare, starre Einheit gebildet wird. Damit wird die Verwendung von Bohrlöchern zwar vermieden; es entstehen aber die Nachteile, dass die Bindung und die Gleitkörper eine starre Einheit bilden, dass die Bindungen nicht individuell eingestellt werden können, und dass durch die starre Befestigung der Bindung auf dem Gleitkörper bei grösseren Beanspruchungen an den Stellen der Lastspitzen das Sportgerät zerstört wird bzw. dass es zum Loslösen der Bindung vom Gleitkörper kommt.

Bekannt ist aus der US-A-3 977 688, daß auf die Oberfläche des Skikörpers ein elastisches Brett bzw. ein Zwischenstück aufgeklebt wird und auf die Oberseite dieses Zwischenstücks eine Tragplatte einer Skibindung geklebt wird. Hier sind also zwei Klebschichten vorhanden, zwischen denen sich ein Zwischenstück aus anderem Material befindet. Dadurch soll die Flexibilität des Skikörpers ohne Behinderung durch die steife Tragplatte erhalten bleiben.

In der PCT-Anmeldung WO 88/01190 ist beschrieben, daß eine Bindung auf einem Ski mittels eines Blocks aus viskoelastischem Material befestigt ist. Dieser Block, der als Dämpfungseinrichtung dient, ist kein Kleber, vielmehr wird der Block oben und unten an der Basisplatte der Bindung bzw. am Ski befestigt.

Bekannt ist auch, daß Bindungen mittels Harz durch Eingießen am Gleitkörper befestigt werden. Das Eingießen der Bindung bildet wiederum eine starre Verbindung, welche spröd ist und insbesondere bei Schlag- und Stoßbeanspruchungen leicht zerbricht.

Der Erfindung liegt die Aufgabe zu Grunde, ein Sportgerät mit Gleitkörper und Aufbau so auszubilden, daß mit möglichst einfachen Mitteln Befestigung und Dämpfung gewährleistet sind.

Diese Aufgabe wird mit den im Anspruch 1 angegebenen Merkmalen gelöst.

Dadurch, daß die Klebemasse sowohl zur Herstellung der Verbindung zwischen Gleitkörper und Aufbau als auch zur Dämpfung herangezogen wird, ergibt sich eine besonders einfache Montage, weil die Verwendung von verschiedenen Materialien vermieden wird.

Besonders vorteilhaft ist es, wenn die Klebemasse eine Bruchdehnung zwischen 100 und 600% aufweist und in der Gestalt mindestens eines, gegebenenfalls von mehreren parallel zueinander und im Abstand voneinander verlaufenden Streifen vorliegt.

Bei Sportgeräten, die einer besonders starken Belastung ausgesetzt sind, ist es zweckmässig, wenn der Aufbau mindestens eine Platte, insbesondere eine Leichtmetallplatte aufweist, welche mit dem bzw. den Gleitkörper(n) verklebt ist bzw. sind, wobei der bzw. die Gleitkörper einen mit einer Gleitschicht versehenen Kern aufweist bzw. aufweisen, der bzw. die mit einem gegebenenfalls glasfaserverstärkten Epoxidharz beschichtet ist bzw. sind.

Durch die Veränderung der Abmessungen der die Klebeverbindung bildenden profilierten Streifen kann die Neigung z.B. der die Bindung tragenden Platte leicht eingestellt werden, wobei unter Umständen zwecks Montageerleichterung Montagehilfen in Form von permanent oder temporär eingesetzten Abstandshaltern Verwendung finden können.

Auf beiliegenden Zeichnungen sind Ausführungsbeispiele des Erfindungsgegenstandes dargestellt, und zwar zeigen
- Fig. 1: einen Vertikalschnitt, welcher die allgemeine Anordnung des Gleitkörpers und des Aufbaus eines Sportgerätes zeigt;
- Fig. 2: eine schematische Ansicht eines Snowboardes von oben;
- Fig. 3: einen schematischen Teilschnitt durch einen Ski;
- Fig. 4: einen Skibob in Seitenansicht in schematischer Darstellung; und
- Fig. 5-8: jeweils, mit a bezeichnet, Ansichten eines Aufbauteils von unten mit aufgebrachter Klebemasse, vor dem Befestigen, und mit b bezeichnet entsprechende Schnitte nach den Linie V-V bis VIII-VIII.

Das erfindungsgemässe Sportgerät weist einen Gleitkörper und einen Aufbau auf und kann zum Beispiel als Ski, als Snowboard, als Skibob, als Wasserski oder dergleichen ausgebildet sein. Wesentlich ist, dass ein Gleitkörper vorhanden und mit einem Aufbau versehen ist. Der Aufbau umfasst in der einfachsten Form eine Skibindung mit Vorderbacken und Fersenteil, welcher in den verschiedensten Ausführungen bekannt ist und nicht näher erläutert wird.

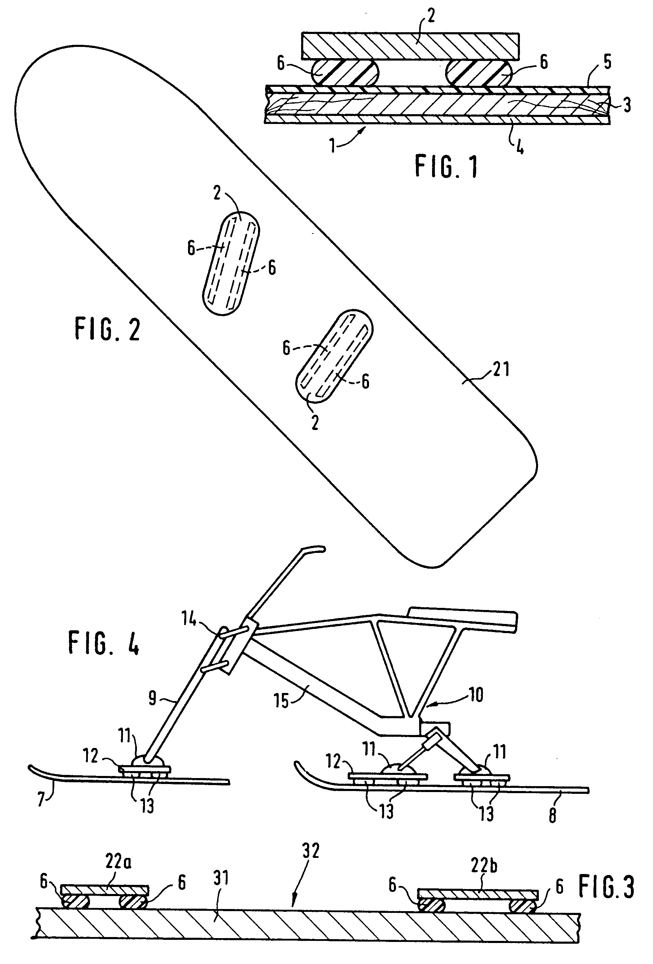

Gemäss der in der Fig. 1 dargestellten Ausführung ist mit 1 ein Gleitkörper bezeichnet, und mit 2 eine Platte, welche mit einer nicht dargestellten, an und für sich bekannten Skibindung versehen ist. Der Gleitkörper 1 kann, gemäss Fig. 3, als Skibrett 31 oder, gemäss Fig. 2, als Snowboard 21 ausgebildet sein. Gemäss der Darstellung in Fig. 1 umfasst der Gleitkörper 1 z.B. einen Holzkern 3, welcher unten eine Gleitschicht 4 und oben eine Schicht 5 aus gegebenenfalls mit Glasfasergewebe verstärktem Expoxidharz besitzt.

Die Befestigung der Platte 2, welche zum Beispiel als Leichtmetallplatte ausgebildet sein kann, am Gleitkörper 1 erfolgt mittels einer Klebemasse, die einen federnd nachgiebigen, elastischen Zwischenkörper bildet. Dazu können gemäss Fig. 1, 2 und 3 Streifen 6 verwendet, die parallel zueinander und im Abstand voneinander verlaufen und in vorteilhafter Weise aus einer Zweikomponenten-Klebesubstanz bestehen, die nach dem Mischen eine selbsthärtende Masse bilden. Gemäss einer bevorzugten Ausführungsform kann die erste Komponente ein Präpolymeres mit endständigen Isocyanatgruppen und die zweite Komponente ein Präpolymeres mit endständigen, gegenüber Isocyanat-Gruppen reaktiven Gruppen enthalten. Eine solche Zweikomponenten-Masse ist im Europäischen Patent No. 0 153 456 beschrieben. Es ist aber auch möglich, eine feuchtigkeitshärtende Ein- oder Zwei-Komponenten-Silikonklebemasse zu verwenden, die insbesondere bei tiefen Temperaturen ein gutes Elastizitätsverhalten zeigt. Weitere Möglichkeiten bestehen darin, eine feuchtigkeitshärtende Ein-Komponenten-Polyurethanklebemasse oder eine reaktive Heißsiegelmasse zu verwenden; letzteres ist besonders dann angebracht, wenn auf eine rasche und bald belastbare Verbindung Wert gelegt wird.

Wesentlich ist, dass die Streifen 6 eine angemessene Breite und Höhe aufweisen; damit die erwünschten, stossdämpfenden Eigenschaften vorhanden sind, sollte die Höhe mindestens etwa 2 mm betragen. Vorteilhaft ist es aber, insbesondere bei der Anwendung im Falle eines Snowboardes, wenn die Streifen 6 ca. 10 - 20 mm, vorzugsweise ca. 15 mm breit und ca. 3-9 mm hoch sind.

In der beschriebenen Weise entsteht eine elastisch nachgiebige Verbindung, deren Elastizität durch Variieren der Dimensionen des Streifens erhöht oder vermindert werden kann. Ferner kann durch die Änderung des Winkels der Platte 2 zum Gleitkörper 1 die Bindung vorteilhaft eingestellt und die Fußstellung optimal auf den Fahrer abgestimmt werden. Zur Erleichterung der Montage können Abstandshalter verwendet werden, um eine genau definierte Stellung der Platte 2 gegenüber der Oberfläche des Gleitkörpers 1 zu erreichen.

Die Streifen 6 bilden eine stossdämpfende, elastische Lagerung in der Form eines Polsters, welches schädliche Schlageinwirkungen dämpft oder sogar aufhebt.

Die durchgeführten Versuche haben gezeigt, dass die vorgeschlagene Verbindung zwischen Gleitkörper 1 und Platte 2 auch bei extremen Beanspruchungen nicht zerstört werden kann und ihre Elastizität behält. Im Gegensatz zu den herkömmlichen Befestigungen, bei welchen die angewendeten Schrauben nach kurzer Zeit ausbrechen, bildet die beschriebene Verbindung eine dauerhafte Lösung, bei welcher eher der Gleitkörper des Sportgerätes unbrauchbar wird, die Klebeverbindung aber, ihre Elastizität beibehaltend, wirksam bleibt.

Gemäss der in der Fig. 4 gezeigten Ausführung kann das Sportgerät auch als Skibob ausgebildet sein, welcher als Gleitkörper einen Vorderski 7 und einen Hinterski 8 aufweist. Die Lenksäule 9 mit Aufhängung 14 ist mit dem Vorderski 7 und der Rahmen 15 mit den Stützen 10 mit dem Hinterski 8 verbunden. Es sind ferner Träger 11 vorgesehen, die je eine Platte 12 tragen. Die Verbindung der Platten 12 mit dem Vorderski 7 bzw. Hinterski 8 erfolgt wiederum durch eine Klebemasse, welche in der Form von Streifen 13, z.B. parallel zueinander und in Abstand voneinander, aufgetragen sein kann. Es können dabei die zuvor erwähnten Klebemassen Verwendung finden, die eine selbsthärtende Masse bilden, welche jedoch Ihre Elastizität beibehalten.

Je nach verwendetem Material und vorgesehener Anwendung ist die Elastizität des Zwischenkörpers bzw. der Zwischenkörper unterschiedlich, d.h. die Bruchdehnung des Klebematerials liegt zwischen 50 und 1000 %. In der Praxis hat es sich als vorteilhaft erwiesen, bei der Anwendung im Zusammenhang mit Skiern, Snowboards, Skibobs und dergleichen das Klebermaterial so einzustellen, dass sich eine zwischen 100 und 600 % liegende Bruchdehnung ergibt.

In der beschriebenen Weise wird wiederum eine zusätzlich stossdämpfende Lagerung der Lenksäule 9 und des Rahmens 15 des Skibobs gegenüber dem Vorder- und Hinterski 7 und 8 erzielt, wobei die vorgeschlagene Klebeverbindung mit den Streifen 13 auch beim härtesten Einsatz nicht zerstört wird.

Bei der Anwendung in Verbindung mit Skiern, z.B. gemäss der schematischen Darstellung in Fig. 3, kann insbesondere erreicht werden, dass der Ski homogen durchfedern bzw. sich elastisch verformen kann, auch wenn die heute üblichen, weitgehend biegesteifen Skischuhe verwendet werden; namentlich der Bereich 32 des Skis, der zwischen den Bindungsplatten 22a und 22b liegt, wird nicht mehr wie bisher durch den fest eingespannten Skischuh in seinem elastischen Verhalten behindert. Als weiterer Vorteil kommt hinzu, dass die Einspannkräfte, mit denen der Skischuh in der Bindung gehalten wird, weitgehend konstant bleiben, auch wenn sich der Ski durchbiegt; somit ist gewährleistet, dass die voreingestellte, erwünschte Auslösung der Sicherheitsbindung in allen Situationen sichergestellt ist.

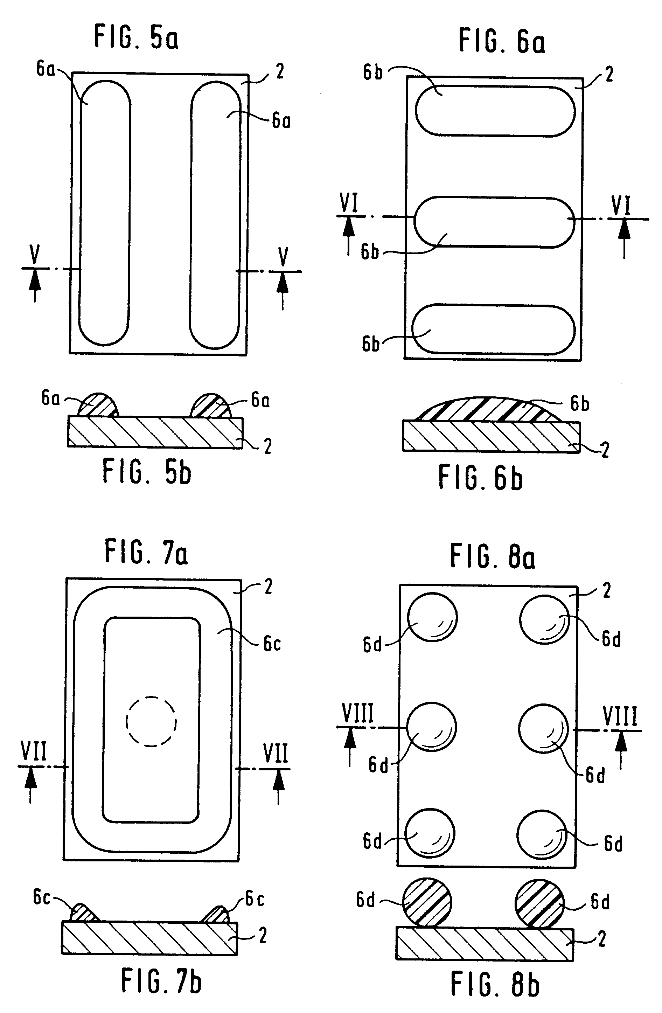

In den Fig. 5 - 8 sind rein beispielsweise verschiedene Varianten dargestellt, wie die elastischen Zwischenkörper ausgebildet und angeordnet sein können. Die mit a bezeichneten Figurenteile zeigen dabei jeweils eine Ansicht z.B. einer Teil des Aufbaus bildenden Platte 2 in einer Ansicht von unten, vor der Montage auf dem Gleitkörper, und die mit b bezeichneten Figurenteile einen zugeordneten Schnitt entlang den Linie V-V bis VIII-VIII.

In der Fig. 5 ist die Platte 2 mit zwei im Abstand zueinander angeordneten, parallel verlaufenden Klebemasse-Streifen 6a versehen. Diese haben halbrunden bzw. annähernd dreieckigen Querschnitt. Je nach Anpressdruck bei der Montage können sie sich bis zu annähernd rechteckigem Querschnitt verformen.

In der Fig. 6 ist die Platte 2 mit drei parallel nebeneinander verlaufenden Klebemasse-Streifen 6b versehen. Deren Querschnitt kann ähnlich ausgebildet sein wie derjenigen der Streifen 6a in Fig. 5. Um im Bereich des Zentrums der Platte jedoch eine höhere Stabilität zu erreichen, nimmt die Höhe der Streifen 6b gegen die Enden hin ab, wie aus Fig. 6b deutlich zu erkennen ist.

Beim Ausführungsbeispiel gemäss Fig. 7 ist eine Art "Rahmen" in Form eines einzelnen, geschlossenen, entlang des Randbereiches der Platte 2 umlaufenden Streifens 6c aus Klebemittelmasse vorgesehen. Diese Lösung kann dann zweckmässig sein, wenn das Eindringen von Wasser, Schnee oder dgl. in den Raum unterhalb der Platte 2 vermieden werden soll. Weiter ist bei diesem Beispiel gezeigt, dass die Streifen 6c auch asymmetrisch dreieckige Form besitzen können, wie aus der Darstellung in Fig. 7b hervorgeht.

In der Fig. 8 schliesslich ist gezeigt, dass die Klebemasse auch in der Gestalt von einzelnen Klebemassen-Kugeln 6d angewendet werden kann, die über die Fläche der Platte 2 verteilt angeordnet sind. Der Begriff "Kugeln" ist dabei nicht im geometrisch wörtlichen Sinn zu verstehen; nach der Montage der Platte 2 und dem Anpressen an den Gleitkörper werden die Zwischenkörper 6d eine abgeplattete Gestalt annehmen.

Das beschriebene Sportgerät ist nicht auf Skis, Snowboards und Skibobs beschränkt, sondern kann allgemein angewendet werden, wo ein Gleitkörper und ein Aufbau Verwendung findet. Obwohl bei Wasserskis keine eigentlichen Bindungen verwendet werden, erlaubt die Erfindung die Verwendung von speziellen Fusshalterungen, die in der beschriebenen Weise an Wasserskibrettern befestigt werden und die sich insbesondere zum Mono-Skifahren eignen, indem eine wesentlich bessere Führung und eine wirksame Dämpfung der auftretenden harten Schläge erzielt wird, die sonst bei den üblichen Wasserskiern ungedämpft zur Wirkung gelangen und keine genaue Skiführung erlauben.

## Patentansprüche

1. Sportgerät mit mindestens einem Gleitkörper und Aufbau, wobei der Aufbau oder mindestens Teile desselben mittels eines federnd nachgiebigen, elastischen Zwischenkörpers mit dem Gleitkörper verklebt ist bzw. sind, dadurch **gekennzeichnet,** daß der Zwischenkörper ausschließlich durch eine Klebemasse gebildet ist, welche eine Bruchdehnung zwischen 50 und 1000% aufweist.

2. Sportgerät nach Anspruch 1, dadurch gekennzeichnet, dass die Klebemasse (6; 13) eine Bruchdehnung zwischen 100 und 600% aufweist.

3. Sportgerät nach Anspruch 1 oder 2, dadurch gekennzeichnet, dass die Klebemasse (6; 13) in der Gestalt mindestens eines profilierten Formkörpers 6; 6a; 6b; 6c; 6d) vorliegt.

4. Sportgerät nach Anspruch 3, dadurch gekennzeichnet, dass die Klebemasse in der Gestalt einer Mehrzahl von parallel zueinander und im Abstand voneinander verlaufenden Streifen (6; 6a; 6b; 13) vorliegt.

5. Sportgerät nach Anspruch 3, dadurch gekennzeichnet, dass die Klebemasse in der Gestalt einer Mehrzahl von im Abstand voneinander angeordneten, im wesentlichen die Form einer abgeflachten Kugel aufweisenden Formkörpern (6d) vorliegt.

6. Sportgerät nach Anspruch 3, dadurch gekennzeichnet, dass die Klebemasse in der Gestalt eines im wesentlichen entlang des Randes des Aufbaus bzw. Aufbauteiles (2) verlaufenden, geschlossenen, rahmenartigen Streifens (6d) vorliegt.

7. Sportgerät nach Anspruch 3, dadurch gekennzeichnet, dass der bzw. die profilierte(n) Formkörper (6; 6a; 6b; 6c; 6d; 13) im Querschnitt im wesentlichen ovale, runde, dreieckige oder rechteckige Form besitzt bzw. besitzen.

8. Sportgerät nach einem oder mehreren der vorangehenden Ansprüchen, dadurch gekennzeichnet, dass der Aufbau mindestens eine Platte, insbesondere eine Leichtmetallplatte (2; 12; 22a, 22b), aufweist, welche mit dem bzw. den Gleitkörper(n) (1; 21; 31) verklebt ist bzw. sind, wobei der bzw. die Gleitkörper (1; 21; 31) einen mit einer Gleitschicht (4) versehenen Kern (3) aufweist bzw. aufweisen, der bzw. die an der der Gleitschicht (4) abgekehrten Seite mit einem gegebenenfalls mit Glasfasergewebe verstärkten Epoxidharz (5) beschichtet ist bzw. sind.

9. Sportgerät nach Ansprüchen 8, dadurch gekennzeichnet, dass die Neigung der Platte (2; 12; 22a, 22b) zum Gleitkörper (1; 21; 31) voreinstellbar ist.

10. Sportgerät nach einem oder mehreren der vorhergehenden Ansprüche, dadurch gekennzeichnet, dass dasselbe als Ski ausgebildet ist, wobei die Skibindung bzw. die Einzelteile (22a; 22b) der Skibindung mittels einer federnd nachgiebigen, elastischen Klebemasse (6) am Skibrett (31) befestigt ist bzw. sind.

11. Sportgerät nach einem oder mehreren der Ansprüche 1 bis 9, dadurch gekennzeichnet, dass dasselbe als Snowboard (21) ausgebildet ist, dessen Bindungen (2) mittels einer federnd nachgiebigen, elastischen Klebemasse (6) mit dem Gleitkörper verbunden sind.

12. Sportgerät nach einem oder mehreren der Ansprüchen 1 bis 9, dadurch gekennzeichnet, dass dasselbe als Skibob ausgebildet ist, dessen Vorder- und Hinterskis (7, 8) mit der Lenksäule (9) mit Aufhängung bzw. mit dem Rahmen (15) des Skibobs mittels einer federnd nachgiebigen, elastischen Klebemasse (13) verbunden sind.

13. Sportgerät nach mindestens einem der vorangehenden Ansprüche, dadurch gekennzeichnet, dass die Klebemasse (6; 13) eine Zwei-Komponenten-Polyurethanmasse ist.

14. Sportgerät nach Anspruch 13, dadurch gekennzeichnet, dass die Klebemasse (6; 13) eine Zweikomponenten-Masse ist, deren erste Komponente ein Präpolymeres mit endständigen Isocyanat-Gruppen enthält und deren zweite Komponente ein Präpolymeres mit endständigen, gegenüber Isocyanatgruppen reaktiven Gruppen enthält.

15. Sportgerät nach mindestens einem der Ansprüche 1 bis 12, dadurch gekennzeichnet, dass die Klebemasse (6; 13) eine feuchtigkeitshärtende Ein- oder Zwei-Komponenten-Silikonklebemasse ist.

16. Sportgerät nach mindestens einem der Ansprüche 1 bis 12, dadurch gekennzeichnet, dass die Klebemasse (6; 13) eine feuchtigkeitshärtende Ein-Komponenten-Polyurethan-Klebemasse ist.

17. Sportgerät nach mindestens einem der Ansprüche 1 bis 12, dadurch gekennzeichnet, dass die Klebemasse (6; 13) eine reaktive Heißsiegelmasse ist.

18. Sportgerät nach mindestens einem der vorangehenden Ansprüche, dadurch gekennzeichnet, dass der bzw. die durch die Klebemasse (6; 13) gebildete(n) Zwischenkörper (6a; 6b; 6c; 6d) mindestens 2 mm hoch ist bzw. sind.

19. Sportgerät nach mindestens einem der vorangehenden Ansprüche, dadurch gekennzeichnet, dass der bzw. die durch die Klebemasse (6; 13) gebildeten Zwischenkörper (6a; 6b; 6c; 6d) ca. 10 - 20 mm breit und ca. 3 - 9 mm hoch sind.

## Claims

1. A sports appliance with at least one sliding member and a superstructure, the superstructure or at least parts thereof being secured to the sliding member by adhesion by means of a springingly resilient elastic intermediate member, characterised in that the intermediate member is constituted solely by an adhesive composition having a breaking elongation of between 50 and 1000%.

2. A sports appliance according to Claim 1, characterised in that the adhesive composition (6, 13) has a breaking elongation of between 100 and 600%.

3. A sports appliance according to Claim 1 or 2, characterised in that the adhesive composition (6, 13) takes the form of at least one profiled shaped member (6, 6a, 6b, 6c, 6d).

4. A sports appliance according to Claim 3, characterised in that the adhesive composition takes the form of a plurality of mutually parallel spaced apart strips (6, 6a, 6b, 13).

5. A sports appliance according to Claim 3, characterised in that the adhesive composition takes the form of a plurality of spaced apart shaped members (6b) substantially in the form of flattened balls.

6. A sports appliance according to Claim 3, characterised in that the adhesive composition takes the form of a closed frame-like strip (6d) extending substantially along the edge of the superstructure or superstructure part (2).

7. A sports appliance according to Claim 3, characterised in that the shaped member or members (6, 6a, 6b, 6c, 6d, 13) is or are of substantially oval round triangular or rectangular cross-section.

8. A sports appliance according to one or more of the preceding Claims, characterised in that the superstructure comprises at least one plate, particularly a -light metal plate (2, 12, 22a, 22b) secured by adhesion to the sliding member(s) (2, 21, 31), the sliding member(s) (1, 21, 31) comprising a core (3) provided with a sliding layer (4) coated on the side remote from the sliding layer (4) with an epoxy resin (5) possibly reinforced with a woven glass fibre fabric.

9. A sports appliance according to Claim 8, characterised in that the angle of inclination of the plate (2, 12, 22a, 22b) to the sliding member (1, 21, 31) can be pre-adjusted.

10. A sports appliance according to one or more of the preceding Claims, characterised in that it is constructed as a ski, the ski binding or the individual parts (22a, 22b) of the ski binding being fixed to the ski board (31) by a springingly resilient elastic adhesive composition (6).

11. A sports appliance according to one or more of Claims 1 to 9, characterised in that it is constructed as a snowboard (21), the bindings (2) of which are connected to the sliding member by means of a springingly resilient elastic adhesive composition (6).

12. A sports appliance according to one or more of Claims 1 to 9, characterised in that it is constructed as a ski bob, of which the front and rear skis (7, 8) are connected to the steering column (9) through a suspension or the frame (15) of the ski bob by means of a springingly resilient elastic adhesive composition (13).

13. A sports appliance according to at least one of the preceding Claims, characterised in that the adhesive composition (6, 13) is a two-component polyurethane composition.

14. A sports appliance according to Claim 13, characterised in that the adhesive composition (6, 13) is a two-component composition the first component of which contains a pre-polymer with terminal isocyanate groups while its second component contains a prepolymer with terminal groups which are reactive to isocyanate groups.

15. A sports appliance according to at least one of Claims 1 to 12, characterised in that the adhesive composition (6, 13) is a moisture-hardening single- or two-component silicone adhesive composition.

16. A sports appliance according to at least one of Claims 1 to 12, characterised in that the adhesive composition (6, 13) is a moisture-hardening single-component polyurethane adhesive composition.

17. A sports appliance according to at least one of Claims 1 to 12, characterised in that the adhesive composition (6, 13) is a reactive hot sealing adhesive.

18. A sports appliance according to at least one of the preceding Claims, characterised in that the intermediate body or bodies (6a, 6b, 6c, 6d) constituted by the adhesive composition (6, 13) is or are at least 2 mm high.

19. A sports appliance according to at least one of the preceding Claims, characterised in that the intermediate body or bodies (6a, 6b, 6c, 6d) formed by the adhesive composition (6, 13) is or are approx. 10 to 20 mm wide and approx. 3 to 9 mm high.

## Revendications

1. Appareil de sport comportant au moins un corps glissant et une superstructure dans lequel la superstructure ou au moins des parties de celle-ci est sont collée(s) au corps glissant à l'aide d'un corps intercalaire élastique et cédant par élasticité, caractérisé par le fait que le corps intercalaire est uniquement constitué par une masse collante présentant un allongement de rupture compris entre 50 et 1000%.

2. Appareil de sport suivant la revendication 1, caractérisé par le fait que la masse collante (6; 13) présente un allongement de rupture compris entre 100 et 600 %.

3. Appareil de sport suivant les revendications 1 ou 2, caractérisé par le fait que la masse collante (6; 13) se présente au moins sous la forme d'un corps moulé profilé 6; 6a; 6b; 6c; 6d).

4. Appareil de sport suivant la revendication 3, caractérisé par le fait que la masse collante se ,présente sous la forme de plusieurs bandes courant parallèlement et à une certaine distance les unes des autres (6; 6a; 6b; 13).

5. Appareil de sport suivant la revendication 3, caractérisé par le fait que la masse collante se présente sous la forme de plusieurs corps moulés (6d) présentant des billes disposées à une certaine distance les unes des autres, constituées pour l'essentiel de billes aplaties.

6. Appareil de sport suivant la revendication 3, caractérisé par le fait que la masse collante se présente sous la forme d'une bande (6d) en forme de cadre, fennée et courant pour l'essentiel le long du bord de la superstructure et/ou de la partie de superstructure (2).

7. Appareil de sport suivant la revendication 3, caractérisé par le fait que le et/ou les corps moulé(s) profilé(s) (6; 6a; 6b; 6c; 6d; 13) offre(nt) une section essentiellement ovale, ronde, triangulaire ou quadrangulaire.

8. Appareil de sport suivant l'une ou plusieurs des revendications précédentes, caractérisé par le fait que la superstructure présente au moins une plaque, en particulier une plaque en métal léger (2; 12; 22a; 22b) collée au et/ou aux corps glissant(s) (1; 21; 31), le et/ou les corps glissant(s) (1; 21; 31) présentant un noyau (3) comportant une surface de glissement (4), ledit noyau étant revêtu sur le côté opposé à la couche de glissement (4) d'une résine époxy (5) éventuellement renforcée d'un tissu de fibre de verre.

9. Appareil de sport suivant la revendication 8, caractérisé par le fait que l'inclinaison de la plaque (2; 12; 22a, 22b) est préréglable par rapport au corps glissant (1; 21; 31).

10. Appareil de sport suivant une ou plusieurs des revendications précédentes, caractérisé par le fait que celui-ci se présente sous la forme d'un ski, la liaison de ski et/ou les pièces (22a; 22b) de la liaison étant fixées sur la latte de ski (31) à l'aide d'une masse collante (6) élastique et cédant par élasticité.

11. Appareil de sport suivant une ou plusieurs des revendications 1 à 9, caractérisé par le fait que celui-ci se présente sous la forme d'un snowboard (21) dont les liaisons (2) sont reliées au corps glissant à l'aide d'une masse collante (6) élastique et cédant par élasticité.

12. Appareil de sport suivant une ou plusieurs des revendications 1 à 9, caractérisé par le fait que celui-ci se présente sous la forme d'un ski-bob dont les skis avant et arrière (7, 8) sont reliés à la colonne de direction (9) avec suspension et/ou au cadre (15) du ski-bob à l'aide d'une masse collante (13) élastique cédant par élasticité.

13. Appareil de sport suivant au moins l'une des revendications précédentes, caractérisé par le fait que la masse collante (6; 13) est constituée par une masse de polyuréthane à deux composants.

14. Appareil de sport suivant la revendication 13, caractérisé par le fait que la masse collante (6; 13) est une masse à deux composants, dont le premier composant contient un prépolymère à groupes isocyanates en fin de chaîne et dont le second composant renferme un prépolymère à groupes en fin de chaîne, réactifs en présence de groupes isocyanates.

15. Appareil de sport suivant au moins l'une des revendications 1 à 12, caractérisé par le fait que la masse collante (6; 13) est constituée par une masse collante aux silicones à un ou deux composants durcissant à l'humidité.

16. Appareil de sport suivant au moins l'une des revendications 1 à 12, caractérisé par le fait que la masse collante (6; 13) est représentée par une masse collante de polyuréthane à un composant durcissant à l'humidité.

17. Appareil de sport suivant au moins l'une des revendications 1 à 12, caractérisé par le fait de la masse collante (6; 13) est une masse réactive de scellement à chaud.

18. Appareil de sport suivant au moins l'une des revendications précédentes, caractérisé par le fait que le et/ou les corps intercalaires (6a; 6b; 6c; 6d) formés par la masse collante (6; 13) font au moins 2 mm de haut.

19. Appareil suivant au moins l'une des revendications précédentes, caractérisé par le fait que le et/ou les corps intercalaires (6a; 6b; 6c; 6d) formés par la masse collante (6; 13) font environ 10 à 20 mm de large et environ 3 à 9 mm de haut.
